# EUROPEAN PATENT SPECIFICATION

(11) **EP 3 735 642 B1**
(45) Date of publication and mention of the grant of the patent: **01.03.2023**
(21) Application number: 18837106.6
(22) Date of filing: 28.12.2018
(51) Int. Cl.: G06F 16/245

(54) **RELATIONAL DATABASE SYSTEM THAT USES REAL-TIME STATISTICS FOR SELECTION OF PHYSICAL OPERATORS**
RELATIONALES DATENBANKSYSTEM ZUR VERWENDUNG VON ECHTZEITSTATISTIKEN ZUR AUSWAHL VON PHYSIKALISCHEN OPERATOREN
SYSTÈME DE BASE DE DONNÉES RELATIONNELLES FAISANT APPEL À DES STATISTIQUES EN TEMPS RÉEL POUR UNE SÉLECTION D'OPÉRATEURS PHYSIQUES

(30) Priority: 04.01.2018 US 201815862513
(43) Date of publication of application: 11.11.2020
(73) Proprietor: Microsoft Technology Licensing, LLC, Redmond, WA 98052-6399 (US)
(72) Inventor: SHARMA, Atri, Redmond, Washington 98052-6399 (US)
(74) Representative: Grünecker Patent- und Rechtsanwälte PartG mbB
(86) International application number: PCT/US2018/067776
(87) International publication number: WO 2019/135977

(56) References cited:
- US-A1- 2010 198 810
- US-A1- 2011 060 731

## Description

### BACKGROUND

The present invention relates to relational databases and in particular to optimization of database queries

A relational database is a collection of data items organized as a set of formally described tables from which data can be easily accessed. A relational database system facilitates access to a relational database by receiving queries from users, applications, or other entities, executing such queries against the relational database to produce a results dataset, and returning the results dataset to the entities that submitted the queries. The queries may be represented using Structured Query Language (SQL) or another suitable database query language.

A relational database system may include a query optimizer and a query execution engine. The query optimizer may be configured to receive a query from a query-generating entity and to generate an efficient execution plan for the query. The query execution engine may be responsible for executing the plan in order to generate answers to the query. Query execution involves the use of operators that perform functions involving one or more tables.

Query execution is an important part of system performance. The way in which a query is executed can prevent or create problems regarding the quantity of space that needs to be utilized to execute the query and the amount of time required to retrieve the query results. Accordingly, benefits may be realized by improvements to the manner in which query execution plans are created and carried out.
US 2010/0198810 A1 discloses that a system that can be used to create a set of one or more maps indicating how an individual database query plan performs under actual conditions. The maps are created by measuring and mapping performance with regard to a range of runtime conditions such as resource availability (available memory, CPU load average, etc.) and data characteristics (skew, selectivity, input size). In one aspect of operation, a system and associated method evaluate the robustness of a given implementation of a database query plan by measuring performance with regard to a range of runtime conditions such as resource availability (for example, amount of memory available) and data characteristics (skew, selectivity, input size).
It is the object of the present invention to provide an improved method and system for selecting database operators.
This object is solved by the subject matter of the independent claims.
Embodiments are defined in the dependent claims.
Any embodiment in the description which is not claimed in the appended claims is for illustrative purposes only.

The invention is as set out in the independent claims, further aspects of the invention are outlined in the dependent claims.

In accordance with one aspect of the present disclosure, a relational database system includes query optimizer and a query execution engine. The query optimizer is configured to receive a query from a query-generating entity and to determine a sequence of operations for executing the query. The query execution engine uses real-time statistics to select physical operators for performing the sequence of operations.

The query optimizer is configured to generate a high-level execution plan that specifies the sequence of operations. The high-level execution plan is structured so that it does not indicate the physical operators that should be used to perform the sequence of operations.

The query execution engine is configured to request and receive cost estimates from a plurality of available physical operators. The query execution engine is also configured to provide real-time statistics to the plurality of available physical operators. The plurality of available physical operators use the real-time statistics to produce the cost estimates. The query execution engine is also configured to select the physical operators to perform the sequence of operations based at least in part on the cost estimates.

For each operation in the sequence of operations, the relational database system may include a pipeline of one or more physical operators that are capable of performing the operation, and the query execution engine may request and receive a separate cost estimate from each physical operator that is part of the pipeline.

In some embodiments, the physical operators may be selected based only on the cost estimates. Alternatively, the physical operators may also be selected based at least in part on past performance information associated with the physical operators. The past performance information may include error margins corresponding to prior execution of the physical operators.

The query execution engine may be additionally configured to determine an actual cost associated with execution of an operation by a physical operator, compare the actual cost with a cost estimate provided by the physical operator, and update an error margin associated with the physical operator based on the comparison.

The query optimizer may be additionally configured to use batched real-time statistics provided by the query execution engine to determine the sequence of operations.

In accordance with another aspect of the present disclosure, a relational database system includes a query optimizer and a query execution engine. The query optimizer is configured to receive a query from a query-generating entity and to generate a high-level execution plan that specifies a sequence of operations for executing the query. The query execution engine is configured to request and receive cost estimates from a plurality of available physical operators. The query execution engine is also configured to provide real-time statistics to the plurality of available physical operators. The plurality of available physical operators may use the real-time statistics to produce the cost estimates. The query execution engine is also configured to select physical operators to perform the sequence of operations based at least in part on the cost estimates.

In accordance with another aspect of the present disclosure, a method may include providing an application programming interface (API) that defines requirements for physical operators that are supported by a relational database system, loading a custom physical operator that implements the API into a pipeline of the relational database system, and requesting and receiving cost estimates from the custom physical operator and providing real-time statistics to the custom physical operator.

In some embodiments, the API may require a function that receives an input tuple and provides an output tuple, a class that defines the real-time statistics for current conditions of the relational database system, and a procedure that takes the class as input and returns a cost estimate.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

Additional features and advantages of implementations of the disclosure will be set forth in the description that follows, and in part will be apparent from the description, or may be learned by the practice of the teachings herein. The features and advantages of such implementations may be realized and obtained by means of the instruments and combinations particularly pointed out in the appended claims. These and other features will become more fully apparent from the following description and appended claims, or may be learned by the practice of such implementations as set forth hereinafter.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, similar reference numbers have been used for similar features in the various embodiments. Unless indicated otherwise, these similar features may have the same or similar attributes and serve the same or similar functions. Understanding that the drawings depict some examples of embodiments, the embodiments will be described and explained with additional specificity and detail through the use of the accompanying drawings in which:
Figure 1 is a block diagram that illustrates an example of a relational database system.
Figure 2 is a block diagram that illustrates certain aspects of a relational database system in accordance with the present disclosure.
Figure 3 is a block diagram that illustrates an example showing how a relational database system may be configured to operate in accordance with the present disclosure.
Figure 4 is a block diagram that illustrates how the selection of a physical operator to perform a particular operation may be based at least in part on cost estimates provided by the physical operators in the corresponding pipeline.
Figure 5 is a block diagram that illustrates how a query execution engine may determine the actual cost that is associated with execution of an operation by a physical operator.
Figure 6 is a block diagram that illustrates how real-time statistics may be used by a query optimizer in its creation of a high-level execution plan.
Figure 7 is a flow diagram that illustrates a method for selecting physical operators for executing a query in accordance with the present disclosure.
Figure 8 is a block diagram that illustrates certain additional aspects of a relational database system in accordance with the present disclosure.
Figure 9 is a flow diagram that illustrates a method for providing a custom physical operator in accordance with the present disclosure.
Figure 10 illustrates certain components that may be included within a computer system.

### DETAILED DESCRIPTION

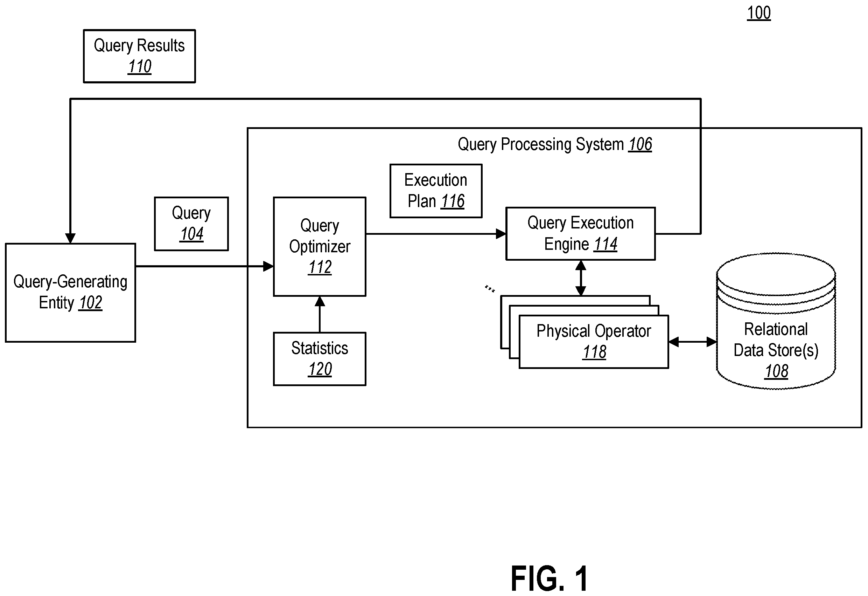

Figure 1 is a block diagram that illustrates an example of a relational database system 100. The relational database system 100 includes a query-generating entity 102, which may comprise a device, a computer program, or some other hardware-based or software-based entity that is capable of generating a query 104 to be applied to a relational database.

The query-generating entity 102 is in electronic communication with a query processing system 106 and is operable to submit the query 104 thereto. Generally speaking, the query processing system 106 is configured to receive the query 104 from the query-generating entity 102, execute the query 104 against relational data store(s) 108 to obtain data responsive to the query 104, and return such data as query results 110 to the query-generating entity 102.

The query processing system 106 includes a query optimizer 112 and a query execution engine 114. As indicated above, the query optimizer 112 may be configured to receive the query 104 submitted by the query-generating entity 102 and generate an efficient execution plan 116 for the query 104. The query optimizer 112 may utilize various statistics 120 that have been accumulated by the relational database system 100 in order to generate the execution plan 116. The statistics 120 may be related to the characteristics of the relational data store(s) 108. For example, for a particular column, the statistics 120 may indicate approximately how many distinct values are in the column, approximately how many nulls are in the column, an approximate histogram of the values distribution in the column, and so forth. Once the execution plan 116 has been generated, the query execution engine 114 may carry out the execution plan 116 in order to generate the query results 110, and provide the query results 110 to the query-generating entity 102.

The query execution engine 114 implements a set of physical operators 118. A physical operator 118 takes as input one or more data streams and produces an output data stream. Some examples of physical operators 118 are sequential scan, index scan, nested loop join, hash join, merge join, plain aggregate, group aggregate, sorted aggregate, and hash aggregate.

In known query processing systems 106, the execution plan 116 indicates the specific physical operators 118 that should be used to carry out the execution plan 116. The query optimizer 112 passes the execution plan 116 to the query execution engine 114, which carries out the execution plan 116 using the physical operators 118 specified therein.

In some known query processing systems 106, the query execution engine 114 does not take into consideration real-time statistics (i.e., current conditions of the relational database system 100) when carrying out the execution plan 116. The statistics 120 that the query optimizer 112 uses to generate the execution plan 116 are not computed at run time. Thus, if conditions change after the time that the execution plan 116 is created, the execution plan 116 may be inefficient in view of the conditions at the time of execution. For example, suppose that the execution plan 116 indicates that a hash join operator (a physical operator 118 that performs a type of join operation) should be used. Although a hash join operator is typically faster than other types of join operators, it also requires a significant amount of memory. If overall memory usage is high at the time the execution plan 116 is being carried out by the query execution engine 114, then it might be better to use another type of join operator (e.g., a nested loop join operator, which is slower but is also less memory intensive) instead of a hash join operator. However, if the query execution engine 114 does not take real-time statistics into consideration when it carries out the execution plan 116, then the query execution engine 114 may use the less optimal hash join operator because that is what the execution plan 116 requires.

There are some query processing systems 106 in which the query execution engine 114 does take real-time statistics into consideration. In such query processing systems 106, however, if the execution plan 116 is deemed to be inefficient in view of the real-time statistics (i.e., in view of current conditions), the query execution engine 114 rebuilds the execution plan 116, either partially or wholly. This process of having the query optimizer 112 create the execution plan 116 and then having the query execution engine 114 rebuild the execution plan 116 is also inefficient.

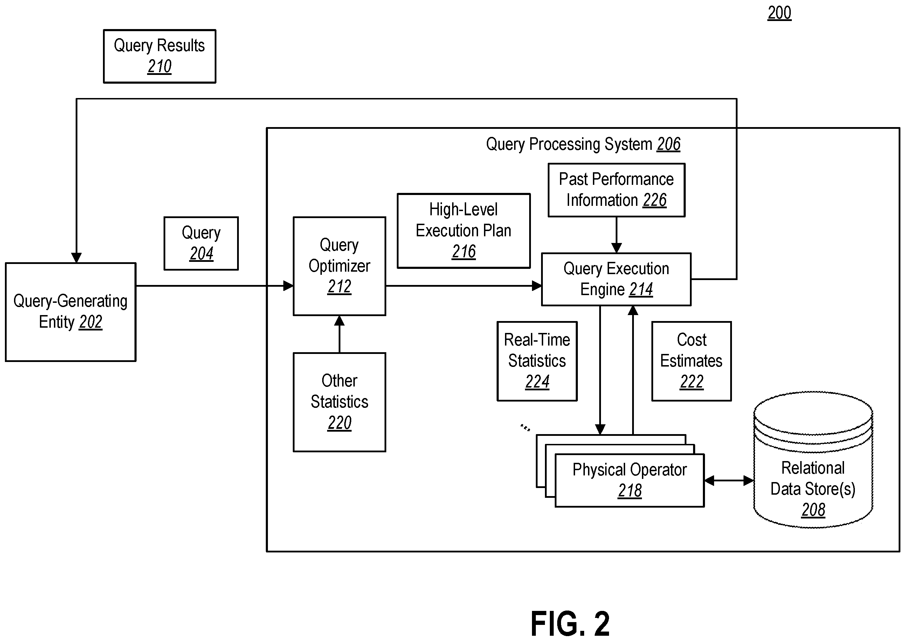

Figure 2 is a block diagram that illustrates certain aspects of a relational database system 200 in accordance with the present disclosure. Like the relational database system 100 described previously, the relational database system 200 shown in Figure 2 includes a query-generating entity 202 in electronic communication with a query processing system 206 that includes a query optimizer 212, a query execution engine 214, and relational data store(s) 208. The query optimizer 212 is configured to receive a query 204 submitted by a query-generating entity 202 and generate an execution plan 216 for the query 204.

In the relational database system 200 shown in Figure 2, however, the query optimizer 212 generates a high-level execution plan 216, which is different from the execution plan 116 described previously. Although the high-level execution plan 216 specifies a sequence of operations for executing the query 204, the high-level execution plan 216 does not indicate which physical operators 218 should be used to perform the sequence of operations. For example, the high-level execution plan 216 may specify the following sequence of operations: a scan operation, followed by a join operation, followed by an aggregate operation. However, the high-level execution plan 216 does not specify which physical scan operator (e.g., a sequential scan operator, an index scan operator), physical join operator (e.g., a nested loop join operator, a hash join operator, a merge join operator), or physical aggregate operator (e.g., a plain aggregate operator, a group aggregate operator, a sorted aggregate operator, a hash aggregate operator) should be used.

The query execution engine 214 receives the high-level execution plan 216 from the query optimizer 212. For each operation specified by the high-level execution plan 216, the query execution engine 214 requests cost estimates 222 from physical operators 218 that are capable of performing the operation. The query execution engine 214 also provides real-time statistics 224 to the physical operators 218. The real-time statistics 224 are different from the other statistics 220 that the query optimizer 212 utilizes to generate the high-level execution plan 216. The real-time statistics 224 reflect current conditions of the relational database system 200 when the query 204 is being executed, whereas the other statistics 220 do not. For example, if a cluster of computing systems is used to implement the relational database system 200, the real-time statistics 224 may indicate the extent to which the resources of the cluster are being used when the query 204 is being executed. The physical operators 218 use the real-time statistics 224 to produce the requested cost estimates 222.

A cost estimate 222 provided by a particular physical operator 218 in relation to a particular operation indicates how efficiently that physical operator 218 can perform the operation under current conditions, taking the real-time statistics 224 into account. For example, a cost estimate 222 may indicate how many computing resources (e.g., memory, processing capabilities, network bandwidth) the physical operator 218 would utilize to perform the operation. In some embodiments, each cost estimate 222 may be a metric between a minimum value (e.g., 0) and a maximum value (e.g., 1).

For each operation specified by the high-level execution plan 216, the query execution engine 214 selects a physical operator 218 to perform the operation based at least in part on the cost estimates 222 that it receives from the physical operators 218. For example, when selecting a physical operator 218 to perform a particular operation, the query execution engine 214 may select the physical operator 218 that provides the most favorable cost estimate 222 for performing that operation.

Alternatively, past performance information 226 associated with the physical operators 218 may also be taken into consideration. For example, if a particular physical operator 218 provides a highly favorable cost estimate 222 but has proven to be unreliable in the past, the query execution engine 214 may select a different physical operator 218 whose cost estimate 222 is deemed to be more reliable even if it is somewhat less favorable.

Thus, the relational database system 200 shown in Figure 2 uses real-time statistics 224 to select physical operators 218 for executing a query 204. Advantageously, unlike known relational database systems that take real-time statistics into consideration, the relational database system 200 shown in Figure 2 is able to use real-time statistics 224 to select physical operators 218 without having to rebuild an execution plan. This is because the execution plan generated by the query optimizer 212 is only a high-level execution plan 216, which specifies a sequence of operations for executing the query 204 but does not indicate which physical operators 218 should be used to perform the sequence of operations. In the depicted relational database system 200, the selection of physical operators 218 is deferred so that it is the query execution engine 214 instead of the query optimizer 212 that selects physical operators 218 for executing the query 204. Stated another way, the query optimizer 212 builds a high-level execution plan 216, and the query execution engine 214 builds a physical execution plan (by selecting the actual physical operators 218 that are used). The selected physical operators 218 may then execute the query 204 against relational data store(s) 208, and the query execution engine 214 may provide the query results 210 back to the query-generating entity 202.

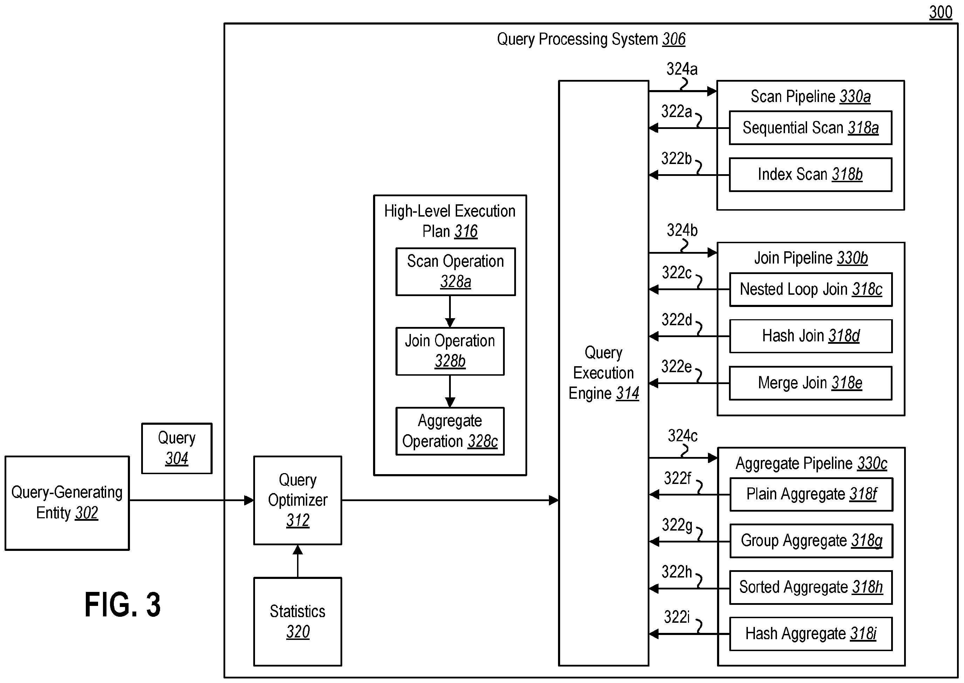

Figure 3 is a block diagram that illustrates an example showing how a relational database system 300 may be configured to operate in accordance with the present disclosure. In the depicted example, a query optimizer 312 receives a query 304 submitted by a query-generating entity 302 and generates a high-level execution plan 316 for the query 304. The query optimizer 312 may utilize various statistics 320 that have been accumulated by the relational database system 300 in order to generate the high-level execution plan 316. The high-level execution plan 316 specifies a sequence of operations 328a-c for executing the query 304, but does not indicate which physical operators 318a-i should be used to perform the operations 328a-c. In particular, the high-level execution plan 316 specifies the following sequence of operations 328a-c: a scan operation 328a, followed by a join operation 328b, followed by an aggregate operation 328c. However, the high-level execution plan 316 does not specify which physical scan operator 318a-b, which physical join operator 318c-e, or which physical aggregate operator 318f-i should be used.

The query execution engine 314 receives the high-level execution plan 316 from the query optimizer 312. For each operation 328a-c specified by the high-level execution plan 316, the query execution engine 314 requests and receives cost estimates 322a-i from physical operators 318a-i that are capable of performing the operations 328a-c.

More specifically, for each operation 328a-c specified by the high-level execution plan 316, the relational database system 300 includes a pipeline 330a-c of one or more registered physical operators 318a-i that are capable of performing the operation 328a-c. Thus, in the depicted example there is a scan pipeline 330a that includes some registered physical scan operators 318a-b that are capable of performing the scan operation 328a, a join pipeline 330b that includes some registered physical join operators 318c-e that are capable of performing the join operation 328b, and an aggregate pipeline 330c that includes some registered physical aggregate operators 318f-i that are capable of performing the aggregate operation 328c. In particular, the scan pipeline 330a includes a sequential scan operator 318a and an index scan operator 318b. The join pipeline 330b includes a nested loop join operator 318c, a hash join operator 318d, and a merge join operator 318e. The aggregate pipeline 330c includes a plain aggregate operator 318f, a group aggregate operator 318g, a sorted aggregate operator 318h, and a hash aggregate operator 318i. Of course, the specific physical operators 318a-i shown in Figure 3 are provided for purposes of example only. Those skilled in the art will recognize that different types of physical operators 318a-i may be included in a query processing system 306 in accordance with the present disclosure.

For each operation 328a-c specified by the high-level execution plan 316, the query execution engine 314 may request and receive a separate cost estimate 322a-i from each physical operator 318a-i that is part of the corresponding pipeline 330a-c. Thus, for the scan operation 328a, the query execution engine 314 may request and receive a cost estimate 322a from the sequential scan operator 318a and a cost estimate 322b from the index scan operator 318b. Similarly, for the join operation 328b, the query execution engine 314 may request and receive a cost estimate 322c from the nested loop join operator 318c, a cost estimate 322d from the hash join operator 318d, and a cost estimate 322e from the merge join operator 318e. Also, for the aggregate operation 328c, the query execution engine 314 may request and receive a cost estimate 322f from the plain aggregate operator 318f, a cost estimate 322g from the group aggregate operator 318g, a cost estimate 322h from the sorted aggregate operator 318h, and a cost estimate 322i from the hash aggregate operator 318i.

The query execution engine 314 may provide real-time statistics 324a-c to the physical operators 318a-i in each pipeline 330a-c, and the physical operators 318a-i may use the real-time statistics 324a-c to produce the cost estimates 322a-i. For example, suppose that the real-time statistics 324a-c indicate that the amount of memory being used by the relational database system 300 is relatively high at the time the query 304 is being executed. In view of this information about high memory usage, the cost estimate 322d produced by the hash join operator 318d (which generally requires a considerable amount of memory) may be less favorable than the cost estimates 322c, 322e produced by the other physical operators 318c, 318e in the join pipeline 330b.

The cost estimates 322a-i may influence the selection of physical operators 318a-i. Continuing with the previous example, if the cost estimates 322c-e produced by the physical operators 318c-e in the join pipeline 330b indicate that the hash join operator 3 18d cannot perform the join operation 328b as efficiently as other physical operators 318c, 318e in the join pipeline 330b under current conditions, then the query execution engine 314 may select a different physical join operator 318c, 318e, other than the hash join operator 318d, to perform the join operation 328b. For example, the query execution engine 314 may select the nested loop join operator 318c to perform the join operation 328b. In a similar way, the cost estimates 322a-b produced by the physical operators 318a-b in the scan pipeline 330a may influence which of these physical operators 318a-b is selected to perform the scan operation 328a, and the cost estimates 322f-i produced by the physical operators 318f-i in the aggregate pipeline 330c may influence which of these physical operators 318f-i is selected to perform the aggregate operation 328c.

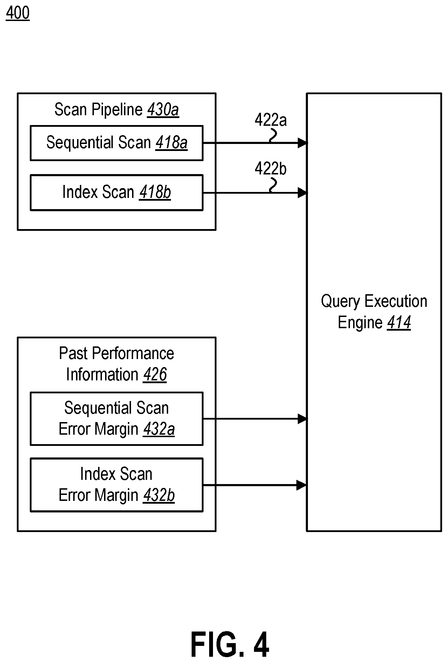

Figure 4 is a block diagram that illustrates certain additional aspects of a relational database system 400 in accordance with the present disclosure. As discussed above, the selection of a physical operator 218 to perform a particular operation specified by the high-level execution plan 216 is based at least in part on the cost estimates 222 provided by the physical operators 218 in the corresponding pipeline. For example, as shown in Figure 4, the selection of a physical scan operator 418a-b to perform a scan operation may be based at least in part on the cost estimates 422a-b provided by the physical scan operators 418a-b in the scan pipeline 430a.

In some embodiments, the query execution engine 414 may simply select the physical operator 418a-b that provides the most favorable cost estimate 422a-b for performing the corresponding operation. For example, if the cost estimate 422a provided by the sequential scan operator 418a is more favorable than the cost estimate 422b provided by the index scan operator 418b, the query execution engine 414 may simply select the sequential scan operator 418a to perform the scan operation without taking other factors into consideration.

Alternatively, the query execution engine 414 may be configured to consider one or more other factors, in addition to the cost estimates 422a-b, when selecting a physical operator 418a-b. In some embodiments, the query execution engine 414 may consider past performance information 426 associated with the physical operators 418a-b. The past performance information 426 may include error margins 432a-b corresponding to prior execution of the physical operators 418a-b.

The error margin 432a-b associated with a physical operator 418a-b may be a measure of the accuracy of previous cost estimates 422a-b provided by that physical operator 418a-b. In other words, the error margin 432a-b associated with a physical operator 418a-b may indicate how closely previous cost estimates 422a-b provided by that physical operator 418a-b corresponded to the actual cost incurred by that physical operator 418a-b when it performed the corresponding operations.

Suppose, for example, that a physical operator 418a-b provides a highly favorable cost estimate 422a-b for performing a particular operation. In other words, the physical operator 418a-b estimates that it will be able to perform the operation very efficiently. If the physical operator 418a-b is actually able to perform the operation as efficiently as it estimated (or at least relatively close), then the error margin 432a-b for that operation is relatively small. If, however, the physical operator 418a-b is not able to perform the operation efficiently and the actual cost for performing the operation greatly exceeds what was estimated, then the error margin 432a-b for that operation is relatively large.

The query execution engine 414 may keep track of error margins 432a-b associated with physical operators 418a-b over time, and use the error margins 432a-b in connection with the selection of physical operators 418a-b. Suppose, for example, that the cost estimate 422a provided by the sequential scan operator 418a is only slightly more favorable than the cost estimate 422b provided by the index scan operator 418b, but the error margin 432a associated with the sequential scan operator 418a is considerably higher than the error margin 432b associated with the index scan operator 418b. In this case, the query execution engine 414 may select the index scan operator 418b to perform the scan operation, even though the index scan operator 418b did not produce the most favorable cost estimate 422b.

In some examples, if the error margin 432a-b associated with a particular physical operator 418a-b exceeds a particular threshold, then the query execution engine 414 may not select the physical operator 418a-b under any circumstances, regardless of how favorable its cost estimates 422a-b are. In other words, physical operators 418a-b may reach a point where they may be deemed too unreliable to be used.

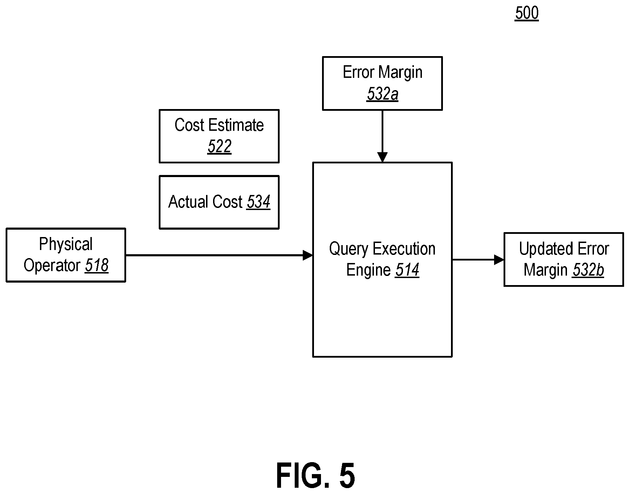

Figure 5 is a block diagram that illustrates certain additional aspects of a relational database system 500 in accordance with the present disclosure. As discussed above, for each operation that is specified by the high-level execution plan 216, the query execution engine 514 selects a physical operator 518 to perform the operation. As shown in Figure 5, once the operation has been performed, the query execution engine 514 may determine the actual cost 534 that is associated with execution of the operation by the physical operator 518. For example, the physical operator 518 may report the actual cost 534 to the query execution engine 514. In this context, the actual cost 534 of an operation may refer to some measure of the amount of computing resources that were used to perform the operation. The query execution engine 514 may then compare the actual cost 534 to perform the operation with the cost estimate 522 that was provided by the physical operator 518.

The query execution engine 514 may maintain an error margin 532a for each physical operator 518 that is included in the relational database system 500. When the query execution engine 514 has compared the actual cost 534 of an operation performed by a physical operator 518 to the cost estimate 522 for the operation that the physical operator 518 provided, the query execution engine 514 may generate an updated error margin 532b for that physical operator 518. The query execution engine 514 may then use this updated error margin 532b the next time that the physical operator 518 is being considered in relation to performing another operation.

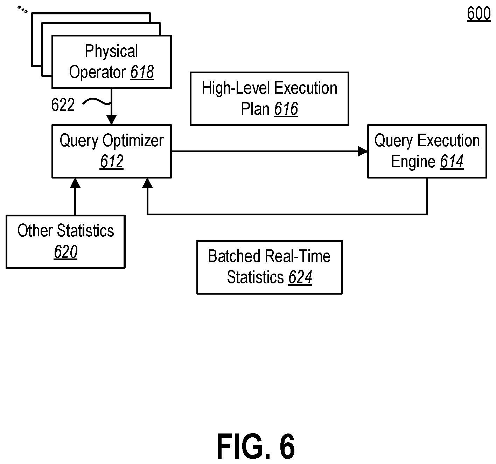

Figure 6 is a block diagram that illustrates certain additional aspects of a relational database system 600 in accordance with the present disclosure. In some embodiments, real-time statistics 624 may also be used by the query optimizer 612 in its creation of the high-level execution plan 616. In particular, the query optimizer 612 may use batched real-time statistics 624 provided by the query execution engine 614 to generate the high-level execution plan 616. For example, the query optimizer 612 may use the real-time statistics 624 from queries that have been executed during a particular window of time (e.g., the most recent N minutes). The query optimizer 612 may use the batched real-time statistics 624 in addition to the other statistics 620 that the query optimizer 612 uses to create the high-level execution plan 616.

In addition, the query optimizer 612 may communicate with physical operators 618 when it is generating the high-level execution plan 616. For example, the query optimizer 612 may request cost estimates 622 from the physical operators 618 based on the batched real-time statistics 624. The query optimizer 612 may use the cost estimates 622 when selecting the sequence of operations for the high-level execution plan 616. More specifically, the query optimizer 612 may select the sequence of operations for the high-level execution plan 616 so as to minimize the overall cost of the high-level execution plan 616. In this way, a factor of real-time goal optimization may be introduced into the query optimizer 612.

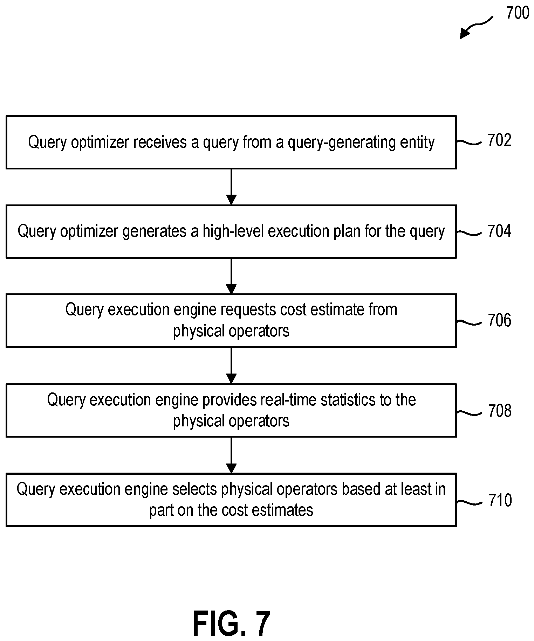

Figure 7 is a flow diagram that illustrates a method 700 for selecting physical operators 218 for executing a query 204 in accordance with the present disclosure. A query optimizer 212 may receive 702 a query 204 from a query-generating entity 202 and generate 704 a high-level execution plan 216 for the query 204. The high-level execution plan 216 specifies a sequence of operations for executing the query 204, but does not indicate which physical operators 218 should be used to perform the sequence of operations.

For each operation specified by the high-level execution plan 216, the query execution engine 214 requests 706 cost estimates 222 from physical operators 218 that are capable of performing the operation. The query execution engine 214 also provides 708 real-time statistics 224 to the physical operators 218. The query execution engine 214 selects 710 physical operators 218 to perform the operations specified by the high-level execution plan 216 based at least in part on the cost estimates 222 that it receives from the physical operators 218.

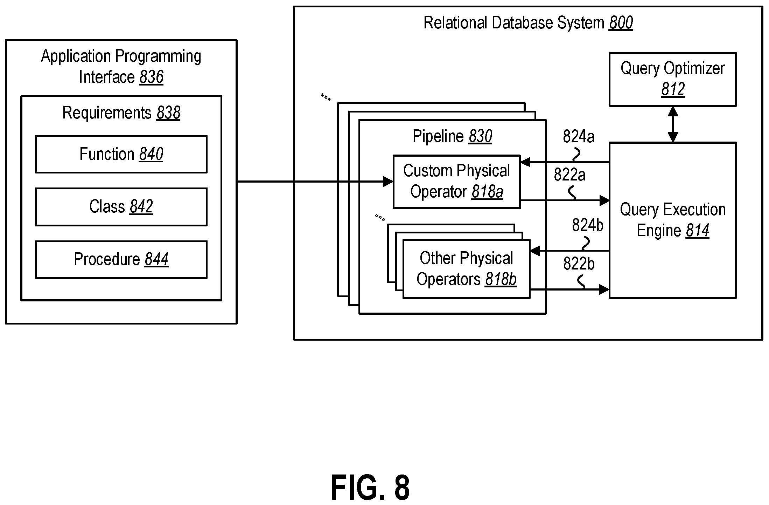

Referring now to Figure 8, another aspect of the present disclosure is related to the manner in which physical operators 818a-b can be added to a relational database system 800. A user of a relational database system 800 may want to create a custom physical operator 818a that would be useful for the user's particular workload. For example, the user may want to implement a unique algorithm for a hash join operator that would provide certain advantages given the user's workload and hardware configuration. However, adding custom physical operators 818a to existing relational database systems 800 can be difficult, if not impossible. For example, adding new physical operators 818a to a relational database system 800 may require making internal changes to the relational database system 800, such as changing the query optimizer 812 and the query execution engine 814. However, most relational database systems 800 are closed systems, such that users are not permitted to make such internal changes.

The present disclosure proposes an improved approach to defining and using physical operators 818a-b. In accordance with the present disclosure, an application programming interface (API) 836 may be defined for a relational database system 800. The API 836 may include a set of requirements 838 for physical operators 818a-b for the relational database system 800. The relational database system 800 may be configured so that it can use any physical operators 818a-b that implement the API 836 (i.e., that satisfy the requirements 838 specified by the API 836).

In some examples, the API 836 may include a requirement 838 to provide a function 840 that receives a tuple as input and provides a tuple as output. The API 836 may also include a requirement 838 to provide a class 842 that defines the real-time statistics 824a for current conditions of the relational database system 800. The API 836 may also include a procedure 844 (which alternatively may be referred to as a method) that takes the class 842 as input and returns a cost estimate 822a.

Thus, in accordance with the present disclosure, it is not necessary to make internal changes to the relational database system 800 (such as modifying the query optimizer 812 and query execution engine 814) in order to create and use a custom physical operator 818a. Instead, once a custom physical operator 818a has been defined that implements the API 836, the custom physical operator 818a may be loaded into a pipeline 830 of the relational database system 800 and used in the same way as other physical operators 818b that have been loaded into the pipeline 830. In other words, the query execution engine 814 may request and receive cost estimates 822a from the custom physical operator 818a in the same way that it requests and receives cost estimates 822b from other physical operators 818b. The query execution engine 814 may also provide real-time statistics 824a to the custom physical operator 818a in the same way that it provides real-time statistics 824b to the other physical operators 818b. The custom physical operator 818a may use the real-time statistics 824a to produce its cost estimates 822a.

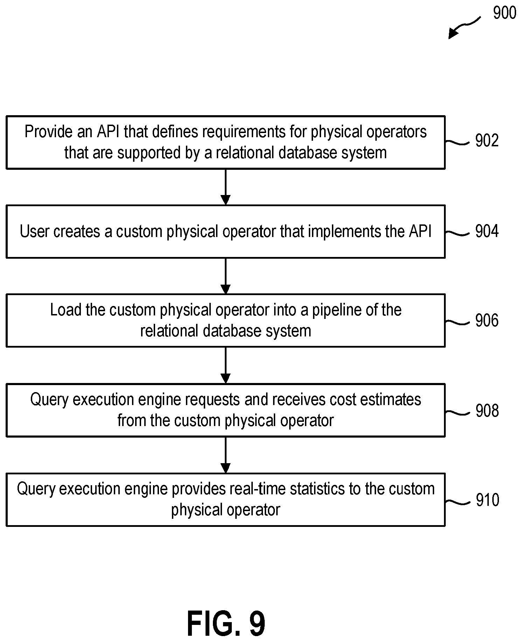

Figure 9 is a flow diagram that illustrates an exemplary method 900 for providing a custom physical operator 818a in accordance with the present disclosure. The method 900 includes providing 902 an API 836 that defines requirements 838 for physical operators 818a-b that are supported by a relational database system 800. A user may create 904 a custom physical operator 818a that implements the API 836. Once the custom physical operator 818a has been created 904, the custom physical operator 818a may be loaded 906 into a pipeline 830 of the relational database system 800. Advantageously, the custom physical operator 818a may be loaded into the pipeline 830 without making any internal changes to the relational database system 800 (e.g., without changing the query optimizer 812 or the query execution engine 814). The query execution engine 814 may then request and receive 908 cost estimates 822a from the custom physical operator 818a in the same way that it requests and receives cost estimates 822b from other physical operators 818b. The query execution engine 814 may also provide 910 real-time statistics 824a to the custom physical operator 818a, and the custom physical operator 818a may use the real-time statistics 824a to produce its cost estimates 822a.

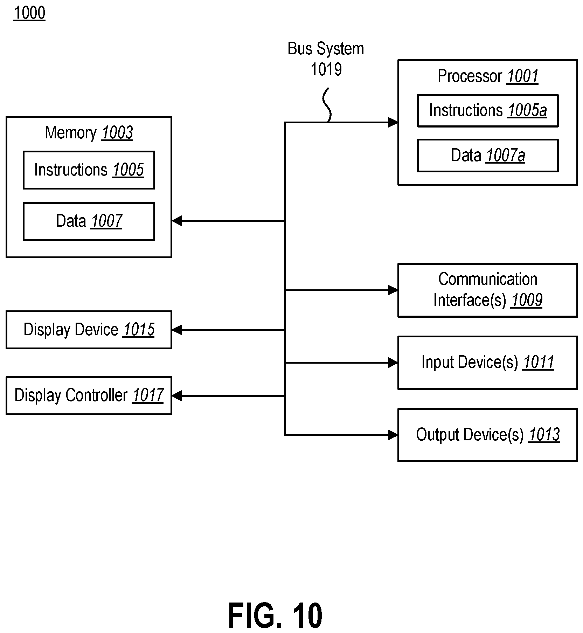

Figure 10 illustrates certain components that may be included within a computer system 1000. One or more computer systems 1000 may be used to implement a relational database system 200, 300, 400, 500, 600, 800 as described herein.

The computer system 1000 includes a processor 1001. The processor 1001 may be a general purpose single- or multi-chip microprocessor (e.g., an Advanced RISC (Reduced Instruction Set Computer) Machine (ARM)), a special purpose microprocessor (e.g., a digital signal processor (DSP)), a microcontroller, a programmable gate array, etc. The processor 1001 may be referred to as a central processing unit (CPU). Although just a single processor 1001 is shown in the computer system 1000 of Figure 10, in an alternative configuration, a combination of processors (e.g., an ARM and DSP) could be used.

The computer system 1000 also includes memory 1003. The memory 1003 may be any electronic component capable of storing electronic information. For example, the memory 1003 may be embodied as random access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM) memory, registers, and so forth, including combinations thereof.

Instructions 1005 and data 1007 may be stored in the memory 1003. The instructions 1005 may be executable by the processor 1001 to implement some or all of the methods disclosed herein. Executing the instructions 1005 may involve the use of the data 1007 that is stored in the memory 1003. When the processor 1001 executes the instructions 1005, various portions of the instructions 1005a may be loaded onto the processor 1001, and various pieces of data 1007a may be loaded onto the processor 1001.

Any of the various examples of modules and components described herein (such as the query optimizer 212 and the query execution engine 214) may be implemented, partially or wholly, as instructions 1005 stored in memory 1003 and executed by the processor 1001. Any of the various examples of data described herein (such as the high-level execution plan 216, the cost estimates 222, the real-time statistics 224, and the query results 210) may be among the data 1007 that is stored in memory 1003 and used during execution of the instructions 1005 by the processor 1001.

A computer system 1000 may also include one or more communication interfaces 1009 for communicating with other electronic devices. The communication interfaces 1009 may be based on wired communication technology, wireless communication technology, or both. Some examples of communication interfaces 1009 include a Universal Serial Bus (USB), an Ethernet adapter, a wireless adapter that operates in accordance with an Institute of Electrical and Electronics Engineers (IEEE) 802.11 wireless communication protocol, a Bluetooth^{®} wireless communication adapter, and an infrared (IR) communication port.

A computer system 1000 may also include one or more input devices 1011 and one or more output devices 1013. Some examples of input devices 1011 include a keyboard, mouse, microphone, remote control device, button, joystick, trackball, touchpad, and lightpen. Some examples of output devices 1013 include a speaker, printer, etc. One specific type of output device that is typically included in a computer system is a display device 1015. Display devices 1015 used with embodiments disclosed herein may utilize any suitable image projection technology, such as liquid crystal display (LCD), light-emitting diode (LED), gas plasma, electroluminescence, or the like. A display controller 1017 may also be provided, for converting data 1007 stored in the memory 1003 into text, graphics, and/or moving images (as appropriate) shown on the display device 1015.

The various components of the computer system 1000 may be coupled together by one or more buses, which may include a power bus, a control signal bus, a status signal bus, a data bus, etc. For the sake of clarity, the various buses are illustrated in Figure 10 as a bus system 1019.

The techniques described herein may be implemented in hardware, software, firmware, or any combination thereof, unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium comprising instructions that, when executed by at least one processor, perform one or more of the methods described herein. The instructions may be organized into routines, programs, objects, components, data structures, etc., which may perform particular tasks and/or implement particular data types, and which may be combined or distributed as desired in various embodiments.

The term "determining" encompasses a wide variety of actions and, therefore, "determining" can include calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing and the like.

The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element or feature described in relation to an embodiment herein may be combinable with any element or feature of any other embodiment described herein, where compatible.

## Claims

1. A relational database system (206; 306; 800), comprising:
a query optimizer (212; 312; 612; 812) configured to receive (702) a query (204; 304) from a query-generating entity (202; 302) and to determine a sequence of operations for executing the query, wherein
the query optimizer is configured to generate (704) a high-level execution plan (216; 316; 616) that specifies the sequence of operations, and wherein the high-level execution plan does not indicate the physical operators that should be used to perform the sequence of operations; and
a query execution engine (214; 314; 414; 514; 614; 814) configured to use real-time statistics (224; 624) to select physical operators (218; 518; 818) for performing the sequence of operations,
wherein the query execution engine is configured to:
request (706) and receive cost estimates (222; 522) from a plurality of available physical operators;
provide real-time statistics to the plurality of available physical operators, wherein the plurality of available physical operators use the real-time statistics to produce the cost estimates; and
select (710) the physical operators to perform the sequence of operations using the cost estimates,
wherein the real-time statistics reflect current conditions of the relational database system when the query is being executed, and
wherein the cost estimate provided by a particular physical operator in relation to a particular operation indicates how efficiently that physical operator can perform the operation under current conditions, taking the real-time statistics into account.

2. The relational database system of claim 1, wherein for each operation in the sequence of operations:
the relational database system comprises a pipeline (330; 430; 830) of one or more physical operators that are capable of performing the operation; and
the query execution engine requests and receives a separate cost estimate (426) from each physical operator that is part of the pipeline.

3. The relational database system of claim 1, wherein the physical operators are selected based only on the cost estimates.

4. The relational database system of claim 1, wherein the physical operators are also selected based at least in part on past performance information associated with the physical operators.

5. The relational database system of claim 4, wherein the past performance information comprises error margins (432; 532) corresponding to prior execution of the physical operators.

6. The relational database system of claim 1, wherein the query execution engine is additionally configured to:
determine an actual cost (534) associated with execution of an operation by a physical operator;
compare the actual cost with a cost estimate provided by the physical operator; and
update an error margin (532b) associated with the physical operator based on the comparison.

7. The relational database system of claim 1, wherein the query optimizer is additionally configured to use batched real-time statistics provided by the query execution engine to determine the sequence of operations.

8. A computer-implemented method comprising:
receiving (702), at a query optimizer, a query (204; 304) from a query-generating entity (202; 302) and to determine a sequence of operations for executing the query;
generating (704), at the query optimizer, the query optimizer a high-level execution plan (216; 316; 616) that specifies the sequence of operations, and wherein the high-level execution plan does not indicate the physical operators that should be used to perform the sequence of operations;
requesting (706), at a query execution engine (214; 314; 414; 514; 614; 814), cost estimates (222; 522) from a plurality of available physical operators;
providing (708), at the query execution engine real-time statistics to the plurality of available physical operators, wherein the plurality of available physical operators use the real-time statistics to produce the cost estimates; and
selecting (710), at the query execution engine, physical operators (218; 518; 818) to perform the sequence of operations using the cost estimates,
wherein the real-time statistics reflect current conditions of the relational database system when the query is being executed, and
wherein the cost estimate provided by a particular physical operator in relation to a particular operation indicates how efficiently that physical operator can perform the operation under current conditions, taking the real-time statistics into account.

9. The method of claim 8, further comprising:
providing an application programming interface, API (836) that defines requirements for physical operators that are supported by a relational database system;
loading a custom physical operator (818a) that implements the API into a pipeline (830) of the relational database system; and
requesting and receiving cost estimates from the custom physical operator and providing real-time statistics to the custom physical operator.

10. The method of claim 9, wherein the API requires:
a function (840) that receives an input tuple and provides an output tuple;
a class (842) that defines the real-time statistics for current conditions of the relational database system; and
a procedure (844) that takes the class as input and returns a cost estimate.

## Patentansprüche

1. Relationales Datenbanksystem (206; 306; 800), umfassend:
einen Abfrageoptimierer (212; 312; 612; 812), der dazu ausgelegt ist, eine Abfrage (204; 304) von einer abfrageerzeugenden Entität (202; 302) zu empfangen (702) und eine Sequenz von Operationen zum Ausführen der Abfrage zu ermitteln, wobei
der Abfrageoptimierer dazu ausgelegt ist, einen hochrangigen Ausführungsplan (216; 316; 616) zu erzeugen (704), der die Sequenz von Operationen bestimmt, und wobei der hochrangige Ausführungsplan die physischen Operatoren nicht angibt, die verwendet werden sollten, um die Sequenz von Operationen durchzuführen; und
eine Abfrageausführungsmaschine (214; 314; 414; 514; 614; 814), die dazu ausgelegt ist, Echtzeitstatistik (224; 624) zu verwenden, um physische Operatoren (218; 518; 818) zum Durchführen der Sequenz von Operationen auszuwählen,
wobei die Abfrageausführungsmaschine für Folgendes ausgelegt ist:
Anfordern (706) und Empfangen von Kostenschätzungen (222; 522) von einer Vielzahl verfügbarer physischer Operatoren;
Bereitstellen von Echtzeitstatistik an die Vielzahl verfügbarer physischer Operatoren, wobei die Vielzahl verfügbarer physischer Operatoren die Echtzeitstatistik verwendet, um die Kostenschätzungen zu erstellen; und
Auswählen (710) der physischen Operatoren, um die Sequenz von Operationen unter Verwendung der Kostenschätzungen durchzuführen,
wobei die Echtzeitstatistik aktuelle Bedingungen des relationalen Datenbanksystems reflektiert, wenn die Abfrage ausgeführt wird, und
wobei die von einem bestimmten physischen Operator in Relation zu einer bestimmten Operation bereitgestellte Kostenschätzung angibt, wie effizient dieser physische Operator die Operation unter aktuellen Bedingungen bei Berücksichtigung der Echtzeitstatistik durchführen kann.

2. Relationales Datenbanksystem nach Anspruch 1, wobei für jede Operation in der Sequenz von Operationen:
das relationale Datenbanksystem eine Pipeline (330; 430; 830) von einem oder mehreren physischen Operatoren umfasst, die imstande sind, die Operation durchzuführen; und
die Abfrageausführungsmaschine eine separate Kostenschätzung (426) von jedem physischen Operator anfordert und empfängt, der Teil der Pipeline ist.

3. Relationales Datenbanksystem nach Anspruch 1, wobei die physischen Operatoren basierend nur auf den Kostenschätzungen ausgewählt werden.

4. Relationales Datenbanksystem nach Anspruch 1, wobei die physischen Operatoren auch basierend zumindest zum Teil auf vergangenen Leistungsinformationen ausgewählt werden, die mit den physischen Operatoren verknüpft sind.

5. Relationales Datenbanksystem nach Anspruch 4, wobei die vergangenen Leistungsinformationen Fehlerspannen (432; 532) umfassen, die voriger Ausführung der physischen Operatoren entsprechen.

6. Relationales Datenbanksystem nach Anspruch 1, wobei die Abfrageausführungsmaschine zusätzlich für Folgendes ausgelegt ist:
Ermitteln tatsächlicher Kosten (534), die mit Ausführung einer Operation durch einen physischen Operator verknüpft sind;
Vergleichen der tatsächlichen Kosten mit einer Kostenschätzung, die von dem physischen Operator bereitgestellt wird; und
Aktualisieren einer Fehlerspanne (532b), die mit dem physischen Operator verknüpft ist, basierend auf dem Vergleich.

7. Relationales Datenbanksystem nach Anspruch 1, wobei der Abfrageoptimierer zusätzlich dazu ausgelegt ist, Batch-Echtzeitstatistiken zu verwenden, die von der Abfrageausführungsmaschine bereitgestellt werden, um die Sequenz von Operationen zu ermitteln.

8. Computerimplementiertes Verfahren, umfassend:
Empfangen (702), bei einem Abfrageoptimierer, einer Abfrage (204; 304) von einer abfrageerzeugenden Entität (202; 302) und Ermitteln einer Sequenz von Operationen zum Ausführen der Abfrage;
Erzeugen (704), bei dem Abfrageoptimierer, eines hochrangigen Ausführungsplans (216; 316; 616), der die Sequenz von Operationen bestimmt, und wobei der hochrangige Ausführungsplan die physischen Operatoren nicht angibt, die verwendet werden sollen, um die Sequenz von Operationen durchzuführen;
Anfordern (706), bei einer Abfrageausführungsmaschine (214; 314; 414; 514; 614; 814), von Kostenschätzungen (222; 522) von einer Vielzahl verfügbarer physischer Operatoren;
Bereitstellen (708), bei der Abfrageausführungsmaschine, von Echtzeitstatistik an die Vielzahl verfügbarer physischer Operatoren, wobei die Vielzahl verfügbarer physischer Operatoren die Echtzeitstatistik verwendet, um die Kostenschätzungen zu erstellen; und
Auswählen (710), bei der Abfrageausführungsmaschine, physischer Operatoren (218; 518; 818), um die Sequenz von Operationen unter Verwendung der Kostenschätzungen durchzuführen,
wobei die Echtzeitstatistik aktuelle Bedingungen des relationalen Datenbanksystems reflektiert, wenn die Abfrage ausgeführt wird, und
wobei die von einem bestimmten physischen Operator in Relation zu einer bestimmten Operation bereitgestellte Kostenschätzung angibt, wie effizient dieser physische Operator die Operation unter aktuellen Bedingungen bei Berücksichtigung der Echtzeitstatistik durchführen kann.

9. Verfahren nach Anspruch 8, weiter umfassend:
Bereitstellen einer Anwendungsprogrammierschnittstelle, API (836), die Anforderungen für physische Operatoren definiert, die von einem relationalen Datenbanksystem unterstützt werden;
Laden eines individuellen physischen Operators (818a), der die API implementiert, in eine Pipeline (830) des relationalen Datenbanksystems; und
Anfordern und Empfangen von Kostenschätzungen von dem individuellen physischen Operator und Bereitstellen von Echtzeitstatistik an den individuellen physischen Operator.

10. Verfahren nach Anspruch 9, wobei die API Folgendes benötigt:
eine Funktion (840), die ein Eingabetupel empfängt und ein Ausgabetupel bereitstellt;
eine Klasse (842), die die Echtzeitstatistik für aktuelle Bedingungen des relationalen Datenbanksystems definiert; und
eine Prozedur (844), die die Klasse als Eingabe heranzieht und eine Kostenschätzung ausgibt.

## Revendications

1. Système de base de données relationnelle (206 ; 306 ; 800) comprenant :
un optimiseur d'interrogation (212 ; 312 ; 612 ; 812) configuré pour recevoir (702) une interrogation (204; 304) à partir d'une entité de génération d'interrogation (202 ; 302) et pour déterminer une séquence d'opérations pour l'exécution de l'interrogation, dans lequel
l'optimiseur d'interrogation est configuré pour générer (704) un plan d'exécution de haut niveau (216 ; 316 ; 616) qui spécifie la séquence d'opérations, et dans lequel le plan d'exécution de haut niveau n'indique pas les opérateurs physiques qui devraient être utilisés pour réaliser la séquence d'opérations ; et
un moteur d'exécution d'interrogation (214 ; 314 ; 414 ; 514 ; 614 ; 814) configuré pour utiliser des statistiques en temps réel (224 ; 624) pour sélectionner des opérateurs physiques (218 ; 518 ; 818) pour réaliser la séquence d'opérations,
dans lequel le moteur d'exécution d'interrogation est configuré pour :
demander (706) et recevoir des estimations de coût (222 ; 522) à partir d'une pluralité d'opérateurs physiques disponibles ;
fournir des statistiques en temps réel à la pluralité d'opérateurs physiques disponibles, dans lequel la pluralité d'opérateurs physiques disponibles utilisent les statistiques en temps réel pour produire les estimations de coût ; et
sélectionner (710) les opérateurs physiques pour réaliser la séquence d'opérations en utilisant les estimations de coût,
dans lequel les statistiques en temps réel reflètent des conditions actuelles du système de base de données relationnelle quand l'interrogation est en cours d'exécution, et
dans lequel l'estimation de coût fournie par un opérateur physique particulier en relation avec une opération particulière indique dans quelle mesure cet opérateur physique peut réaliser efficacement l'opération dans des conditions actuelles, en tenant compte des statistiques en temps réel.

2. Système de base de données relationnelle selon la revendication 1, dans lequel pour chaque opération dans la séquence d'opérations :
le système de base de données relationnelle comprend un pipeline (330 ; 430 ; 830) d'un ou plusieurs opérateurs physiques qui sont aptes à réaliser l'opération ; et
le moteur d'exécution d'interrogation demande et reçoit une estimation de coût séparée (426) à partir de chaque opérateur physique qui fait partie du pipeline.

3. Système de base de données relationnelle selon la revendication 1, dans lequel les opérateurs physiques sont sélectionnés sur la base seulement des estimations de coût.

4. Système de base de données relationnelle selon la revendication 1, dans lequel les opérateurs physiques sont également sélectionnés sur la base au moins en partie d'informations de performances passées associées aux opérateurs physiques.

5. Système de base de données relationnelle selon la revendication 4, dans lequel les informations de performances passées comprennent des marges d'erreur (432 ; 532) correspondant à une exécution antérieure des opérateurs physiques.

6. Système de base de données relationnelle selon la revendication 1, dans lequel le moteur d'exécution d'interrogation est de plus configuré pour :
déterminer un coût réel (534) associé à l'exécution d'une opération par un opérateur physique ;
comparer le coût réel avec une estimation de coût fournie par l'opérateur physique ; et
mettre à jour une marge d'erreur (532b) associée à l'opérateur physique sur la base de la comparaison.

7. Système de base de données relationnelle selon la revendication 1, dans lequel l'optimiseur d'interrogation est de plus configuré pour utiliser des statistiques en temps réel regroupées fournies par le moteur d'exécution d'interrogation pour déterminer la séquence d'opérations.

8. Procédé mis en oeuvre par ordinateur comprenant :
la réception (702), au niveau d'un optimiseur d'interrogation, d'une interrogation (204 ; 304) à partir d'une entité de génération d'interrogation (202 ; 302) et pour déterminer une séquence d'opérations pour l'exécution de l'interrogation ;
la génération (704), au niveau de l'optimiseur d'interrogation, d'un plan d'exécution de haut niveau (216 ; 316 ; 616) qui spécifie la séquence d'opérations, et dans lequel le plan d'exécution de haut niveau n'indique pas les opérateurs physiques qui devraient être utilisés pour réaliser la séquence d'opérations ;
la demande (706), au niveau d'un moteur d'exécution d'interrogation (214 ; 314 ; 414 ; 514 ; 614 ; 814), d'estimations de coût (222 ; 522) à partir d'une pluralité d'opérateurs physiques disponibles ;
la fourniture (708), au niveau d'un moteur d'exécution d'interrogation, de statistiques en temps réel à la pluralité d'opérateurs physiques disponibles, dans lequel la pluralité d'opérateurs physiques disponibles utilisent les statistiques en temps réel pour produire les estimations de coût ; et
la sélection (710), au niveau d'un moteur d'exécution d'interrogation, d'opérateurs physiques (218 ; 518 ; 818) pour réaliser la séquence d'opérations en utilisant les estimations de coût,
dans lequel les statistiques en temps réel reflètent des conditions actuelles du système de base de données relationnelle quand l'interrogation est en cours d'exécution, et
dans lequel l'estimation de coût fournie par un opérateur physique particulier en relation avec une opération particulière indique dans quelle mesure cet opérateur physique peut réaliser efficacement l'opération dans des conditions actuelles, en tenant compte des statistiques en temps réel.

9. Procédé selon la revendication 8, comprenant en outre :
la fourniture d'une interface de programmation d'application, API (836), qui définit des exigences pour des opérateurs physiques qui sont pris en charge par un système de base de données relationnelle ;
le chargement d'un opérateur physique personnalisé (818a) qui met en oeuvre l'API dans un pipeline (830) du système de base de données relationnelle ; et
la demande et la réception d'estimations de coût à partir de l'opérateur physique personnalisé et la fourniture de statistiques en temps réel à l'opérateur physique personnalisé.

10. Procédé selon la revendication 9, dans lequel l'API requiert :
une fonction (840) qui reçoit un tuple d'entrée et fournit un tuple de sortie ;
une classe (842) qui définit les statistiques en temps réel pour des conditions actuelles du système de base de données relationnelle ; et
une procédure (844) qui prend la classe comme entrée et renvoie une estimation de coût.
